# EUROPEAN PATENT APPLICATION

(11) **EP 1 926 295 A1**
(43) Date of publication of application: **28.05.2008**
(21) Application number: 07120188.3
(22) Date of filing: 07.11.2007
(51) Int. Cl.: H04M 1/253, H04M 3/42, H04L 29/06, H04L 12/18, H04L 12/58

(54) **VoIP terminal apparatus, VoIP communication system and presence check method thereof**

(30) Priority: 21.11.2006 KR 20060115508
(71) Applicant: Samsung Electronics Co., Ltd., Suwon-si Gyeonggi-do 443-742 (KR)
(72) Inventor: Hwang, Soon-hoon Jugong Yeongtong Village, Yongin-si, Gyeonggi-do (KR)
(74) Representative: Grootscholten, Johannes A.M.

(57) **Abstract**

A Voice over Internet Protocol(VoIP) terminal apparatus includes: a user input part; a display; a communication part, which communicates through a network; a storage part which stores a subscriber information of a plurality of remote subscribers; and a controller which stores the subscriber information inputted through the user input part in the storage part, displays the subscriber information stored in the storage part on the display if a communication mode is inputted through the user input part, and controls the communication part to request a presence information of a remote subscriber according to an established condition from a Session Initiation Protocol(SIP)/presence server.

## Description

### BACKGROUND

### Field of Invention

Apparatuses and methods consistent with the present invention relate to a Voice over Internet Protocol (VoIP) terminal apparatus, a VoIP communication system and a presence check method thereof, and more particularly, to a VoIP terminal apparatus, a VoIP communication system and a presence check method thereof which reduce the number of times that a network is used to check a presence and provide effective communication.

### Description of the Related Art

A VoIP communication which is also called an Internet call has advantages of providing a cheap phone call service and easily providing a multimedia service of an Internet integrated with a voice call service. Thus, a VoIP terminal apparatus using a VoIP communication system is increasingly used.

There are various methods to make a phone call in the VoIP terminal apparatus using the VoIP communication system. One of them is that the VoIP terminal apparatus previously requests a presence information of a plurality of remote subscribers from a presence server and saves the received presence information. Then, a user checks the presence information and may try to call a remote subscriber only if the remote subscriber is in a status of being able to receive the call.

For that, the VoIP terminal apparatus has a subscriber list. A subscriber information may be supplemented to the subscriber list in case of receiving a call from the remote subscriber, calling the remote subscriber and/or inputting information of the remote subscriber to the subscriber list by the user.

By the way, if the user makes a call by using a presence function, the presence information of the many remote subscribers has to be confirmed, due to too much information as a result of continuous addition of the subscriber information. In this case, if the VoIP terminal apparatus is dedicated to this function only, there may be no problem. However, if the VoIP terminal apparatus is an apparatus having any other function such as a computer generally using a network, the other function like the network communication may have a problem. In other words, if the VoIP terminal apparatus has the subscriber information of many remote subscribers, the VoIP terminal apparatus continuously requests the presence information of many remote subscribers from the presence server so as to check the presence information of many remote subscribers. Also, the presence server sends the presence information of many remote subscribers to the VoIP terminal apparatus. Accordingly, the number of times that the network is used increases and efficiency of using the network decreases. However, if the user does not use the presence function, it is inconvenient because the user can not check the information of the remote subscribers.

### SUMMARY

Accordingly, it is an aspect of the present invention to provide a VoIP terminal apparatus, a VoIP communication system and a presence check method thereof which are capable of reducing the number of times that a network is used to check a presence.

Furthermore, it is an aspect of the present invention to provide a VoIP terminal apparatus, a VoIP communication system and a presence check method thereof which provide efficient communication by checking a state of a remote subscriber whom a user wants to communicate with.

Additional aspects of the present invention will be set forth in part in the description which follows and, in part, will be obvious from the description, or may be learned by practice of the present invention.

The foregoing and/or other aspects of the present invention can be achieved by providing a Voice over Internet Protocol(VoIP) terminal apparatus comprising: a user input part; a communication part, which communicates through a network; a storage part which stores a subscriber information of a plurality of remote subscribers; and a controller which stores the subscriber information inputted through the user input part in the storage part, displays the subscriber information stored in the storage part on a display if a communication mode is inputted through the user input part, and controls the communication part to request a presence information of a remote subscriber according to an established condition from a Session Initiation Protocol(SIP)/presence server.

According to an aspect of the invention, the controller displays a sub-dialog screen including a corresponding function list based on the presence information received through the communication part on the display.

According to an aspect of the invention, the controller differently displays an available function and an unavailable function among the function list based on the presence information received through the communication part on the display.

According to an aspect of the invention, the controller displays the presence information received through the communication part on the display.

According to an aspect of the invention, the controller displays a main dialog screen including the subscriber information stored in the storage part on the display if the communication mode is inputted through the user input part.

According to an aspect of the invention, the controller controls the communication part to request the presence information from the remote subscriber from the SIP/presence server if the remote subscriber whom a user wants to communicate with is selected among the subscriber information of the main dialog screen.

According to an aspect of the invention, the controller controls the communication part to request the presence information of the remote subscriber being displayed to be checked on the display among the subscriber information of the main dialog screen from the SIP/presence server.

According to an aspect of the invention, the controller controls the communication part to request the presence information of every remote subscriber corresponding to the subscriber information which is displayed on the main dialog screen from the SIP/presence server if the main dialog screen is activated.

According to an aspect of the invention, the controller controls the communication part to request the presence information of the remote subscriber based on a priority order from the SIP/presence server, if the priority order is supplemented in the subscriber information stored in the storage part and the main dialog screen is activated.

According to an aspect of the invention, the controller controls the communication part to request the presence information of the remote subscriber whose information includes a presence check function from the SIP/presence server if the presence check function is supplemented in the subscriber information stored in the storage part and the main dialog screen is activated.

According to an aspect of the invention, the controller stores the presence check function in a presence check item of a subscriber list based on statistics information of the remote subscriber who communicated with a user.

The foregoing and/or other aspects of the present invention can be achieved by providing a presence check method of a Voice over Internet Protocol(VoIP) terminal apparatus comprising a user input part, a display and a communication part which communicates through a network, the presence check method comprising: storing a subscriber information of a plurality of remote subscribers through the user input part; displaying the stored subscriber information if a communication mode is inputted through the user input part; and controlling the communication part to request a presence information of a remote subscriber according to an established condition from a Session Initiation Protocol(SIP)/presence server.

According to an aspect of the invention, the displaying the stored subscriber information comprises displaying a main dialog screen having the subscriber information in a storage part if the communication mode is inputted through the user input part.

According to an aspect of the invention, the controlling the communication part comprises controlling the communication part to request the presence information of the remote subscriber from the SIP/presence server, if the remote subscriber whom a user wants to communicate with is selected from the subscriber information of the main dialog screen.

According to an aspect of the invention, the controlling the communication part comprises controlling the communication part to request the presence information of the remote subscriber being displayed to be checked on the display among the subscriber information of the main dialog screen from the SIP/presence server.

According to an aspect of the invention, the controlling the communication part comprises controlling the communication part to request the presence information of every remote subscriber corresponding to the subscriber information displayed on the main dialog screen from the SIP/presence server if the main dialog screen is activated.

According to an aspect of the invention, the controlling the communication part comprises controlling the communication part to request the presence information of the remote subscriber based on a priority order from the SIP/presence server if the priority order is supplemented in the subscriber information in the storage part and the main dialog screen is activated.

According to an aspect of the invention, the controlling the communication part comprises controlling the communication part to request the presence information of the remote subscriber whose information has a presence check function from the SIP/presence server if the presence check function is supplemented in the subscriber information in the storage part and the main dialog screen is activated.

According to an aspect of the invention, the presence check method of the VoIP terminal apparatus further comprises storing the presence check function in a presence check item of a subscriber list by statistics information of the remote subscriber who communicated with the user

The foregoing and/or other aspects of the present invention can be achieved by providing a Voice over Internet Protocol(VoIP) communication system comprising: a VoIP terminal apparatus which displays a subscriber information if a communication mode is inputted, and requests a presence information of a remote subscriber if the remote subscriber whom a user wants to communicate with is selected among the subscriber information; and a Session Initiation Protocol(SIP)/presence server which transmits the presence information according to a request of the presence information from the VoIP terminal apparatus.

According to an aspect of the invention, the VoIP terminal apparatus differently displays an available function and an unavailable function of a function list based on the received presence information.

According to an aspect of the invention, the VoIP terminal apparatus displays the received presence information.

The foregoing and/or other aspects of the present invention can be achieved by providing a presence check method of a Voice over Internet Protocol(VoIP) communication system comprising a VoIP terminal apparatus and a Session Initiation Protocol(SIP)/presence server, the presence check method comprising: displaying a subscriber information if a communication mode is inputted in the VoIP terminal apparatus and requesting a presence information of a remote subscriber from the SIP/presence server if the remote subscriber whom a user wants to communicate with is selected among the subscriber information; and transmitting the presence information in the SIP/presence server according to requesting of the presence information from the VoIP terminal apparatus.

According to an aspect of the invention, the presence check method of the VoIP communication system further comprises differently displaying an available function and an unavailable function among a function list based on the received presence information in the VoIP terminal apparatus.

According to an aspect of the invention, the presence check method of the VoIP communication system further comprises displaying the received presence information in the VoIP terminal apparatus.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a schematic diagram illustrating a VoIP communication system according to an exemplary embodiment of the present invention;
FIG. 2 is a block diagram of a VoIP terminal apparatus according to an exemplary embodiment of the present invention;
FIG. 3 is a flow chart of a presence check method of a VoIP communication system according to an exemplary embodiment of the present invention; and
FIG. 4 is a view illustrating an example of a presence check method of a VoIP terminal apparatus according to an exemplary embodiment of the present invention.

### DETAILED DESCRIPTION OF EMBODIMENTS

Hereinafter, exemplary embodiments of the present invention will be described in detail with reference to the accompanying drawings, wherein like reference numerals refer to like elements throughout.

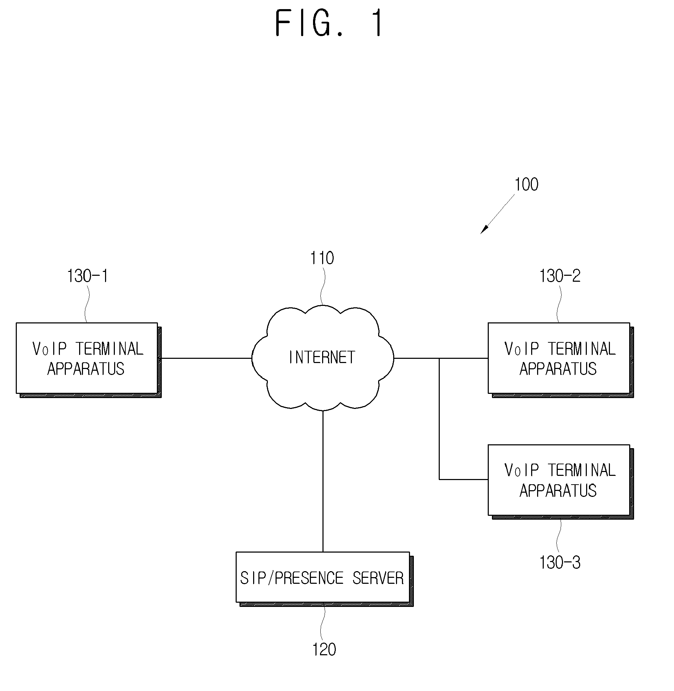

As shown in FIG. 1, a VoIP communication system 100 provides various multimedia and comprises a network 110, a Session Initiation Protocol (SIP)/presence server 120 and a plurality of VoIP terminal apparatuses 130-1, 130-2 and 130-3 which are connected to the network 110.

The network 110 is an Internet network 110 being used as a backbone of the VoIP communication system 100. Here, the Internet network 110 comprises a wireless network as well as a wired network.

The SIP/presence server 120 makes the plurality of VoIP terminal apparatuses 130-1, 130-2 and 130-3 communicate with each other through the network 110. The general VoIP communication system 100 has to use a unique Internet protocol (IP) address on the network 110 to communicate with a remote subscriber. However, due to the lack of a static IP address a dynamic IP address is used by a technology of Network Address Transform (NAT).

The SIP/presence server 120 makes the VoIP communication system 100 use the dynamic IP address so that the VoIP communication system 100 may communicate with the remote subscriber if the VoIP communication system 100 has information of the remote subscriber's ID regardless of a user's IP address. Also, the SIP/presence server 120 saves the subscriber information of lots of remote subscribers to provide a presence service. Here, the presence service means the service to relay the corresponding presence information in response to presence information request of a registered user on a remote subscriber while keeping the received presence information, i.e., an information on the availability of communication, of a plurality of VoIP terminals 130-1, 130-2 and 130-3. The presence information shows a state of the VoIP terminal apparatus such as log-in, log-off, call-available, video-available, voice mail-available and email-available. Furthermore, the presence information may comprise information showing a current state of the remote subscriber, for example, on-conference and on-training.

FIG. 1 illustrates an integrated SIP/presence server 120 but it can be divided to an SIP server and a presence server according to their functions.

The VoIP terminal apparatus 130-1 can be used to communicate or hold a conference in voice and/or video through the network 110 and comprises a Wibro terminal apparatus, a Wimax terminal apparatus, a computer having a wired Internet call function and other known communication apparatuses in the art.

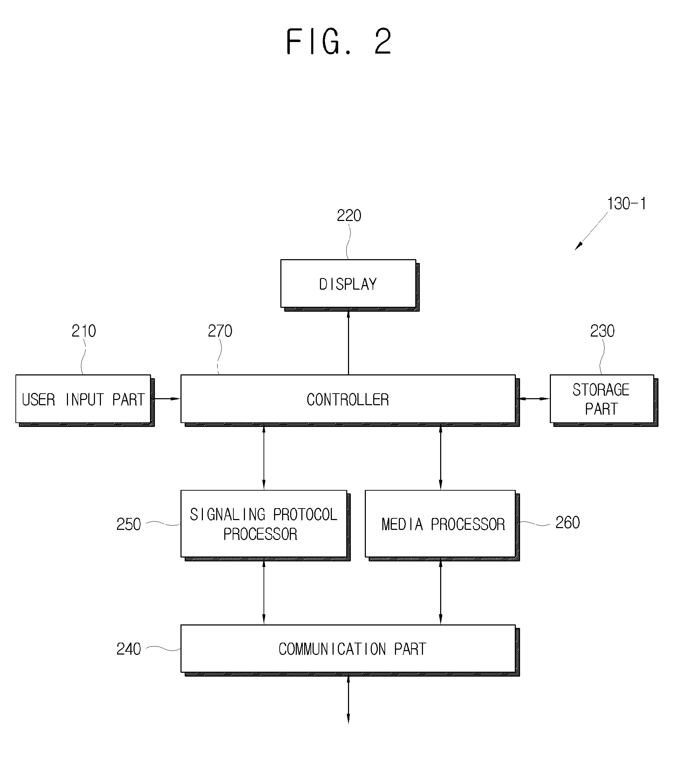

As shown in FIG. 2, the VoIP terminal apparatus 130-1 comprises a user input part 210, a display 220, a storage part 230, a communication part 240, a signaling protocol processor 250, a media processor 260 and a controller 270.

The user input part 210 receives commands of controlling a VoIP terminal apparatus and VoIP communication from the user and transmits the commands to the controller 270. Also, the user inputs a subscriber information of lots of remote subscribers through the user input part 210. The user input part 210 comprises keys provided in the VoIP terminal apparatus 130-1, a touch pad input part, a keyboard which may connect to the VoIP terminal apparatus 130-1 and other known input devices in the art.

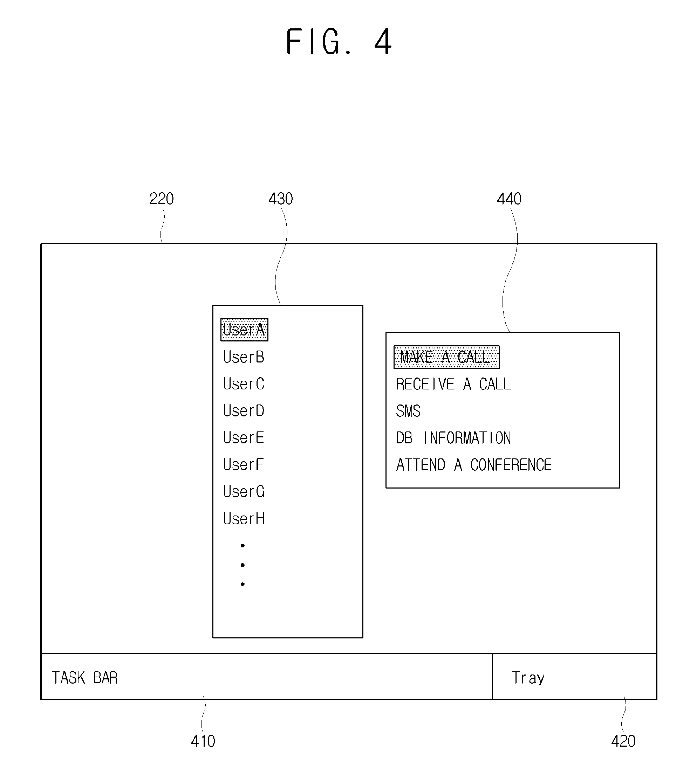

The display 220 displays a state of VoIP communication and the state of a VoIP terminal apparatus of the remote subscriber which performs the VoIP communication. The display 220 displays a main dialog screen 430 having the subscriber information of the remote subscriber and displays a sub-dialog screen 440 having a function list based on the presence information received through the communication part 240 as shown in FIG. 4. The display 220 comprises a monitor connected to the VoIP terminal apparatus 130-1 as well as a displaying part in the VoIP terminal apparatus 130-1.

The storage part 230 stores the subscriber information of the remote subscriber inputted through the user input part 210. Also, the subscriber list can be stored in the storage part 230 with a presence check function of the remote subscriber added to the subscriber list. Furthermore, the subscriber list may include a type of the VoIP terminal apparatus.

A table 1 shows the contact list of the VoIP terminal apparatus 130-1 according to the present invention.

**[Table 1]**

| Remote subscriber's name | Presence check | Type of terminal apparatus |
|---|---|---|
| user A | Exist | video call |
| user B | | voice call |
| user C | Exist | e-mail |
| user D | | voice call |
| user E | | video call |

The communication part 240 performs the VoIP communication with the SIP/presence server 120 or the remote subscriber's terminal apparatus through the network 110.

The signaling protocol processor 250 uses a VoIP signaling protocol such as H.232, Session Initiation Protocol (SIP) and other known protocols in the art to process a communication session between the remote subscriber's terminal apparatus which is capable of the VoIP communication and the VoIP terminal apparatus 130-1.

The media processor 260 performs a Real-time Transport Protocol (RTP) data communication with the remote subscriber's terminal apparatus in which the VoIP communication session is set, and may process a media data comprised in RTP data.

The controller 270 controls an overall operation of the VoIP terminal apparatus 130-1. The controller 270 saves the subscriber information inputted through the user input part 210 in the storage part 230 and sets the presence check function in a presence check item of the subscriber list based on statistics information of the remote subscriber who communicated with the user and saves the presence check item in the storage part 230. Here, the statistics information comprises a time and a number of times that the user calls the remote subscriber.

The controller 270 displays the main dialog screen 430 including the subscriber information saved in the storage part 230 on the display 220 if a communication mode is inputted through the user input part 210. Also, if a subscriber whom the user wants to communicate with is selected based on the subscriber information of the main dialog screen 430, the controller 270 controls the communication part 240 to request the presence information of the selected subscriber from the SIP/presence server 120.

The controller 270 displays the sub-dialog screen 440 including the function list based on the presence information received through the communication part 240 on the display 220. In this case, the controller 270 may differently display an available function and an unavailable function of the function list on the display 220. For example, only the available function may be displayed on the display 220.

Furthermore, the controller 270 may display the presence information received through the communication part 240 on the display 220.

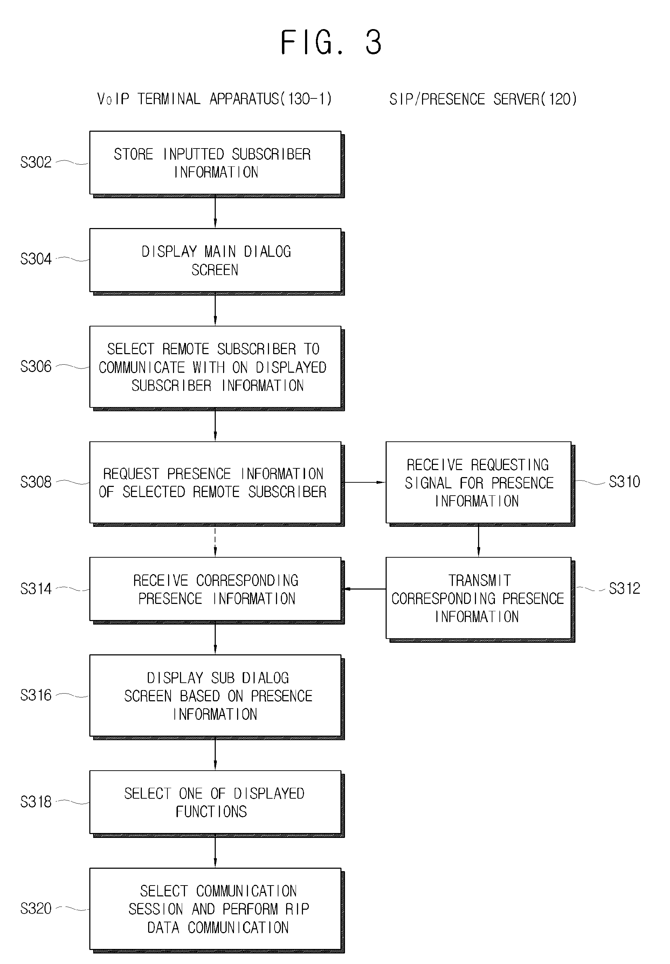

Hereinafter, a flow chart of a presence check method of the VoIP communication system is described by referring to Figs. 3 and 4.

The controller 270 of the VoIP terminal apparatus 130-1 supplements the subscriber information inputted through the user input part 210 to the subscriber list and stores the subscriber information in the storage part 230 if the subscriber information is inputted to be stored through the user input part 210 at operation S302. Also, the controller 270 uses the statistics information of the remote subscriber who communicated with the user to set the presence check function in the presence check item of the subscriber list and store the set presence check item in the storage part 230.

The controller 270 displays the main dialog screen 430 including the subscriber information of the storage part 230 on the display 220 if the communication mode is inputted through the user input part 210 at operation S304.

The user selects a remote subscriber whom the user wants to communicate with among the subscriber information of the main dialog screen 430 through the user input part 210 at operation S306. One example to select the remote subscriber is to locate a curser on the subscriber information and push a right button of a mouse to click the subscriber. FIG. 4 describes an example that selects user A as the remote subscriber.

The controller 270 controls the signaling protocol processor 250 to request the presence information of the user A from the SIP/presence server 120 and sends a requesting signal of the presence information through the communication part 240 at operation S308.

The SIP/presence server 120 receives the requesting signal of the presence information from the VoIP terminal apparatus 130-1 at operation S310. Then, the SIP/presence server 120 transmits the presence information of the user A to the VoIP terminal apparatus 130-1 according to the requesting signal of the presence information at operation S312.

The communication part 240 of the VoIP terminal apparatus 130-1 receives the presence information from the SIP/presence server 120 and outputs the received presence information to the signaling protocol processor 250. Then, the signaling protocol processor 250 outputs the presence information of the user A to the controller 270 at operation S314.

The controller 270 displays the sub-dialog screen 440 including the function list based on the presence information on the display 220 at operation S316. The sub-dialog screen 440 comprises the function list to communicate with the VoIP terminal apparatus 130-2 of the user A. FIG. 4 describes an example of the function list such as "make a call", "receive a call", "SMS", "DB information", and "attend a conference". The function list may display a corresponding function only according to a type of the VoIP terminal apparatus 130-2. Also, the controller 270 may differently display the available function and the unavailable function of the function list on the display 220.

The user selects one of functions in the sub-dialog screen 440 through the user input part 210 at operation S318. FIG. 4 describes that the "make a call" of the function list in the sub-dialog screen 440 is selected as an example. However, if the line of the user A is busy, the "make a call" function is not activated so that the user can perform the "make a call" function after the line is not busy or use the SMS function which is activated to send a text message.

If the user selects the "make a call" in the sub-dialog screen 440 through the user input part 210, the controller 270 controls the signaling protocol processor 250 to set the communication session with the VoIP terminal apparatus 130-2 of the user A which the user wants to communicate with. Also, if the communication session is set with the VoIP terminal apparatus 130-2 of the user A through the signaling protocol processor 250, the controller 270 controls the media processor 260 to perform the RTP data communication with the VoIP terminal apparatus 130-2 of the user A at operation S320.

Figs. 3 and 4 only describe requesting the presence information to the remote subscriber selected through the user input part 210 but it is only an example and requesting method of the presence information to reduce traffic of the network 110 can be variously provided.

In other words, the controller 270 may control the communication part 240 to request the presence information of the remote subscriber being displayed on the display 220 to be checked among the subscriber information of the main dialog screen 430 from the SIP/presence server 120.

The controller 270 may control the communication part 240 to request the presence information of every remote subscriber corresponding to the subscriber information displayed on the main dialog screen 430 from the SIP/presence server 120 if the main dialog screen is activated.

The controller 270 may control the communication part 240 to request the presence information of the remote subscriber based on a priority order, if the main dialog screen 430 is activated and the priority order is supplemented to the subscriber information stored in the storage part 230.

If the subscriber information in the storage part 230 comprises the presence check function, the controller 270 may control the communication part 240 to request the presence information of the remote subscriber whose information comprises the presence check function, from the SIP/presence server 120.

As described above, the present invention reduces the number of times that the network is used to check the presence.

Also, the present invention is capable of checking the state of the remote subscriber whom the user wants to communicate with so that efficient communication is available.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A Voice over Internet Protocol(VoIP) terminal apparatus comprising:
a user input part;
a communication part, which communicates through a network;
a storage part which stores a subscriber information of a plurality of remote subscribers; and
a controller which stores the subscriber information inputted through the user input part in the storage part, displays the subscriber information stored in the storage part on a display if a communication mode is inputted through the user input part, and controls the communication part to request a presence information of a remote subscriber according to an established condition from a Session Initiation Protocol(SIP)/presence server.

2. The VoIP terminal apparatus according to claim 1, wherein the controller displays a sub-dialog screen including a corresponding function list based on the presence information received through the communication part on the display.

3. The VoIP terminal apparatus according to claim 2, wherein the controller differently displays an available function and an unavailable function among the function list based on the presence information received through the communication part on the display.

4. The VoIP terminal apparatus according to claim 2, wherein the controller displays the presence information received through the communication part on the display.

5. The VoIP terminal apparatus according to claim 1, wherein the controller displays a main dialog screen including the subscriber information stored in the storage part on the display if the communication mode is inputted through the user input part.

6. The VoIP terminal apparatus according to claim 5, wherein the controller controls the communication part to request the presence information of the remote subscriber from the SIP/presence server if the remote subscriber whom a user wants to communicate with is selected among the subscriber information of the main dialog screen.

7. The VoIP terminal apparatus according to claim 5, wherein the controller controls the communication part to request the presence information of the remote subscriber being displayed to be checked on the display among the subscriber information of the main dialog screen from the SIP/presence server.

8. The VoIP terminal apparatus according to claim 5, wherein the controller controls the communication part to request the presence information of every remote subscriber corresponding to the subscriber information which is displayed on the main dialog screen from the SIP/presence server if the main dialog screen is activated.

9. The VoIP terminal apparatus according to claim 5, wherein the controller controls the communication part to request the presence information of the remote subscriber based on a priority order from the SIP/presence server, if the priority order is supplemented in the subscriber information stored in the storage part and the main dialog screen is activated.

10. The VoIP terminal apparatus according to claim 5, wherein the controller controls the communication part to request the presence information of the remote subscriber whose information includes a presence check function from the SIP/presence server if the presence check function is supplemented in the subscriber information stored in the storage part and the main dialog screen is activated.

11. The VoIP terminal apparatus according to claim 10, wherein the controller stores the presence check function in a presence check item of a subscriber list based on statistics information of the remote subscriber who communicated with a user.

12. A presence check method of a Voice over Internet Protocol(VoIP) terminal apparatus comprising a user input part, a display and a communication part which communicates through a network, the presence check method comprising:
storing a subscriber information of a plurality of remote subscribers through the user input part;
displaying the stored subscriber information if a communication mode is inputted through the user input part; and
controlling the communication part to request a presence information of a remote subscriber according to an established condition from a Session Initiation Protocol (SIP) /presence server.

13. The presence check method of the VoIP terminal apparatus according to claim 12, wherein the displaying the stored subscriber information comprises displaying a main dialog screen having the subscriber information in a storage part if the communication mode is inputted through the user input part.

14. The presence check method of the VoIP terminal apparatus according to claim 13, wherein the controlling the communication part comprises controlling the communication part to request the presence information of the remote subscriber from the SIP/presence server, if the remote subscriber whom a user wants to communicate with is selected from the subscriber information of the main dialog screen.

15. The presence check method of the VoIP terminal apparatus according to claim 13, wherein the controlling the communication part comprises controlling the communication part to request the presence information of the remote subscriber being displayed to be checked on the display among the subscriber information of the main dialog screen from the SIP/presence server.

16. The presence check method of the VoIP terminal apparatus according to claim 13, wherein the controlling the communication part comprises controlling the communication part to request the presence information of every remote subscriber corresponding to the subscriber information displayed on the main dialog screen from the SIP/presence server if the main dialog screen is activated.

17. The presence check method of the VoIP terminal apparatus according to claim 13, wherein the controlling the communication part comprises controlling the communication part to request the presence information of the remote subscriber based on a priority order from the SIP/presence server if the priority order is supplemented in the subscriber information in the storage part and the main dialog screen is activated.

18. The presence check method of the VoIP terminal apparatus according to claim 13, wherein the controlling the communication part comprises controlling the communication part to request the presence information of the remote subscriber whose information has a presence check function from the SIP/presence server if the presence check function is supplemented in the subscriber information in the storage part and the main dialog screen is activated.

19. The presence check method of the VoIP terminal apparatus according to claim 18, further comprising storing the presence check function in a presence check item of a subscriber list by statistics information of the remote subscriber who communicated with the user.

20. A Voice over Internet Protocol(VoIP) communication system comprising:
a VoIP terminal apparatus which displays a subscriber information if a communication mode is input, and requests a presence information of a remote subscriber if the remote subscriber whom a user wants to communicate with is selected among the subscriber information; and
a Session Initiation Protocol(SIP)/presence server which transmits the presence information according to a request of the presence information from the VoIP terminal apparatus.

21. The VoIP communication system according to claim 20, wherein the VoIP terminal apparatus differently displays an available function and an unavailable function of a function list based on the received presence information.

22. The VoIP communication system according to claim 21, wherein the VoIP terminal apparatus displays the received presence information.

23. A presence check method of a Voice over Internet Protocol(VoIP) communication system comprising a VoIP terminal apparatus and a Session Initiation Protocol(SIP)/presence server, the presence check method comprising:
displaying a subscriber information if a communication mode is inputted in the VoIP terminal apparatus and requesting a presence information of a remote subscriber from the SIP/presence server if the remote subscriber whom a user wants to communicate with is selected among the subscriber information; and
transmitting the presence information in the SIP/presence server according to requesting of the presence information from the VoIP terminal apparatus.

24. The presence check method of the VoIP communication system according to claim 23, further comprising differently displaying an available function and an unavailable function among a function list based on the received presence information in the VoIP terminal apparatus.

25. The presence check method of the VoIP communication system according to claim 23, further comprising displaying the received presence information in the VoIP terminal apparatus.
